# EUROPEAN PATENT APPLICATION

(11) **EP 4 564 048 A1**
(43) Date of publication of application: **04.06.2025**
(21) Application number: 23213023.7
(22) Date of filing: 29.11.2023
(51) Int. Cl.: G01S 7/40, G01S 13/931

(54) **METHOD FOR CLEANING A RADAR SENSOR AND RADAR SENSOR CLEANING SYSTEM**

(71) Applicant: Robert Bosch GmbH, 70442 Stuttgart (DE)
(72) Inventor: Bunea, Ioan-Calin, Cluj-Napoca (RO); Siean, Alexandru-Claudiu, Cluj-Napoca (RO)

(57) **Abstract**

The invention regards a method for cleaning (10) a vehicle radar sensor comprising: providing sensor signal information (14) from a sensor signal (16) of the radar sensor (18), a comparison step (22) including comparing the sensor signal information (14) with a signal quality threshold (T), if the sensor signal information (14) is below the signal quality threshold (T), a cleaning step (26) including cleaning debris from a sensor external structure (28) forming an interface between the radar sensor (18) and the vehicle environment (20), by at least one spraying step (26), which includes spraying fluid on the sensor external structure (28) by a spraying device (38), wherein the radar sensor (18) is arranged for object detection of objects in the vehicle environment (20) and the sensor signal information (14) for comparing with the signal quality threshold (T) includes at least a performance benchmark (M) of the object detection of the radar sensor (18). The invention further regards a radar sensor cleaning system (36).

## Description

The invention regards a method for cleaning a vehicle radar sensor according to the preamble of claim 1. The invention further regards a radar sensor cleaning system.

### Prior Art

In US 2016/176384 A1, a Method for cleaning a radar sensor for a vehicle is described, in which a signal output of the radar sensor is compared with a signal quality threshold, and if the signal output is below the signal quality threshold, the radar sensor is cleaned by spraying a fluid through a nozzle.

### Summary of the Invention

According to the present invention a method for cleaning a vehicle radar sensor with all features from claim 1 is suggested. This allows to improve detectability of the radar sensor in harsh environments.

The vehicle can be a motor vehicle, a car, preferably a passenger car, a two-wheeled vehicle, especially a motorcycle or trucks. The radar sensor can be mounted on an exterior structure of the vehicle, such that the radar sensor faces the vehicle environment directly. The radar sensor can also be mounted inside a housing having an opening for transmitting the radar sensor detection signals. Debris and contaminants can enter through the opening from the vehicle environment to the radar sensor.

The object detection can be used for automatic cruise control ACC or automatic emergency braking AEB of the vehicle or both.

The detected objects can be persons, animals, plants, buildings, infrastructure devices, obstacles, other vehicles or devices.

The sensor external structure can include a sensor housing, a sensor cover or both.

Debris or contaminants can accumulate on the sensor external structure due to environmental influences of the radar sensor, especially due to weather conditions or road surface conditions or both. Debris or contaminants can be at least one of ice, water, snow, mud, slush, dust, sand, dirt particles, insects or biological deposits.

The duration of the spraying step can be between 1 and 10 seconds, preferably between 2 and 5 seconds, most preferably 3 seconds.

The performance benchmark can be a scale or value, especially to evaluate or measure an efficiency, quality, accuracy, sensitivity, selectivity and/or resolution, preferably compared to a standard or reference.

According to a specific embodiment of the invention, the signal quality threshold is an object detection performance threshold of the object detection of the radar sensor. The object detection performance threshold can be a minimum detection performance, which when further decreased reduces driving safety with the vehicle.

According to another specific embodiment of the invention, the performance benchmark includes a quality benchmark about a quality of the object detection. The quality benchmark can be a detection accuracy, which especially includes how accurately the radar sensor can detect the objects. The detection accuracy is preferably assessed by a number of at least one of true positives (correct detections), false positives (incorrect detections), true negatives (correct non detections) or false negatives (missed detections). The quality benchmark can be a detection rate or probability of detection, which especially is the likelihood that the radar sensor will correctly detect an object when it is within its range. The quality benchmark can be a classification accuracy, which especially measures how accurately the radar sensor can classify detected objects. For instance, distinguishing between different types of vehicles, like cars, trucks, motorcycles or between vehicles and non-vehicles, like pedestrians or stationary objects. The quality benchmark can be a categorization precision, which especially assesses the radar sensor's ability to categorize objects into more specific subgroups, such as by size, speed or direction of movement. The quality benchmark can be a precision, which especially measures the accuracy of the detections, especially the proportion of true positives among all positive detections. The quality benchmark can be a recall which measures the completeness of the detections, especially the proportion of true positives among all actual positives.

According to a further specific embodiment of the invention, the signal quality threshold is a minimum number of objects during a first time period and the performance benchmark is a number of detected objects in the vehicle environment within the first time period. By comparing the number of objects detected during the first time period to an established baseline or minimum detection rate, the object detection performance can be assessed. The quality threshold can be derived, especially specifically for the current scenario, from other vehicle sensors used for object detection, such as other radar sensors or other sensor types, like LIDAR, ultrasonic sensors or cameras.

According to a preferred specific embodiment of the invention, the signal quality threshold is a maximum decrease rate of a number of objects during a second time period and the performance benchmark is a decrease of a number of detected objects in the vehicle environment within the second time period. The second time period can be different or equal to the first time period.

According to a further specific embodiment of the invention, the signal quality threshold changes dynamically during vehicle operation. The performance threshold can change depending on environmental or vehicle conditions or both. The performance threshold can change depending on a vehicle location or time or both. The vehicle location can be defined by a global position, especially depending on a country or region and/or a local position, for example a freeway or city road, of the vehicle.

According to a further specific embodiment of the invention, the cleaning step includes at least two spraying steps separated by a third time period. The cleaning step can directly follow the comparison step. The third time period can have a duration between 1 and 5 seconds. The third time period can be adapted, preferably during operation of the vehicle.

In the scope of the present invention is further suggested a radar sensor cleaning system including all features from claim 8. At least the spraying device of the radar sensor cleaning system is directly attached to the vehicle. The processing unit can be attached to the vehicle or located outside of the vehicle, for example in the cloud.

The processing unit can trigger activation of the spraying device by informing the user of the car who activated the spraying device manually or by automatically activation of the spraying device.

According to a specific embodiment of the invention, the spraying device is arranged above the sensor external structure in a direction opposite to the gravitational force direction. This allows to wash away the debris or contaminants from the radar sensor external structure making use of the gravity effect.

According to a further specific embodiment of the invention, the spraying device is arranged outside of a sensor Field-of-View which is used for the object detection. The spraying device can be attached with a distance to the radar sensor.

Further advantages and advantageous embodiments of the invention emerge from the description of the figures and the figures.

### Figure Description

The invention is described in detail below with reference to the figures.
- Figure 1:: A method for cleaning a vehicle radar sensor according to a specific embodiment of the invention.
- Figure 2:: A radar sensor cleaning system according to a specific embodiment of the invention.
- Figure 3:: A diagram showing a performance benchmark used in the method from figure 1.

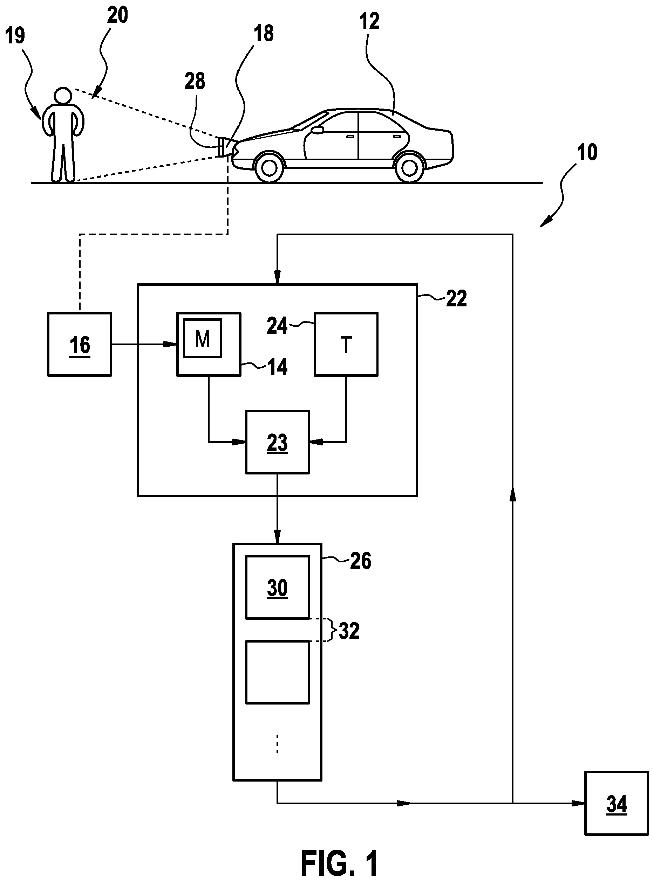

Figure 1 shows a method for cleaning a vehicle radar sensor according to a specific embodiment of the invention. The method for cleaning 10 a radar sensor mounted on a vehicle 12 comprises providing sensor signal information 14 from a sensor signal 16 of the radar sensor 18 for object detection in a vehicle environment 20. The radar sensor 18 is capable to detect objects 19 in the vehicle environment 20 which are inside the Field-of-View of the radar sensor 18.

The sensor signal information 14 is extracted from the sensor signal 16. In a comparison step 22 a comparison 23 between the sensor signal information 14 and a signal quality threshold T is done. The sensor signal information 14 includes a performance benchmark M of the object detection of the radar sensor 18, especially a number of detected objects 19 in the vehicle environment 20 within a first time period. The signal quality threshold T is an object detection performance threshold 24, which especially is a minimum number of objects 19 during the first time period.

If the sensor signal information 14 is below the signal quality threshold T, a following cleaning step 26 is performed which includes cleaning debris from a sensor external structure 28 forming an interface between the radar sensor 18 and the vehicle environment 20, by at least one spraying step 30, which includes spraying fluid on the sensor external structure 28 by a spraying device. The cleaning step 26 includes several spraying steps 30 separated by a third time period 32.

After the cleaning step 26, the comparison step 22 is performed again and if the sensor signal information 14 still is below the signal quality threshold T, a further cleaning step 26 is performed and/or a message 34, especially for being shown in a display of the vehicle 12 is generated. It is possible to repeat the comparison and cleaning step 22, 26 again and depending on the output of the comparison step 22, the message 34, especially for being shown in the display, could be generated. This message 34 could inform the vehicle user about the sensor contamination as a warning or error message.

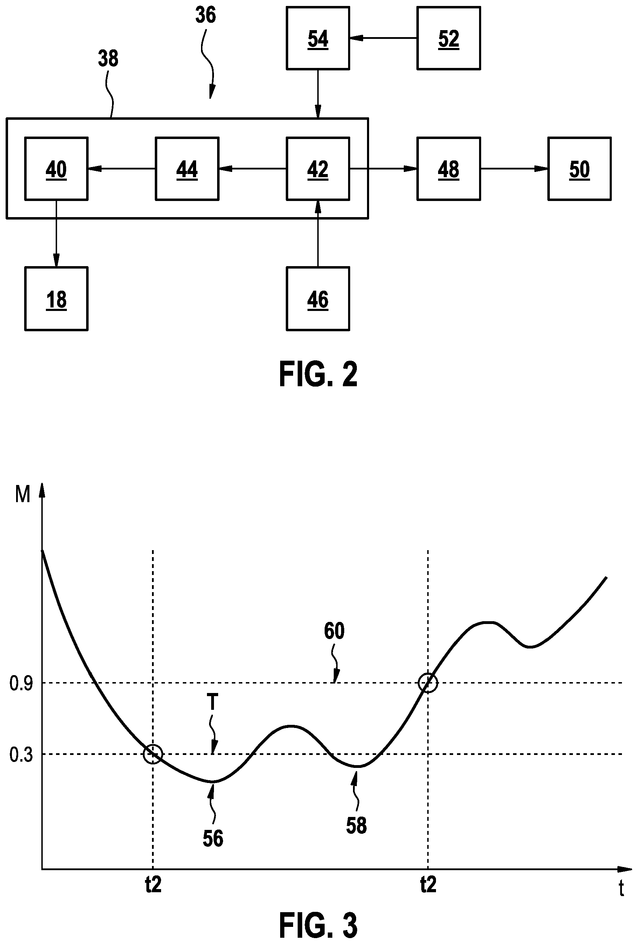

Figure 2 shows a radar sensor cleaning system according to a specific embodiment of the invention. The radar sensor cleaning system 36 for cleaning a radar sensor 18 of a vehicle comprises a spraying device 38 associated with the radar sensor 18, configured to remove debris on a sensor external structure forming the interface between the radar sensor 18 and the vehicle environment by performing at least one spraying step with spraying fluid onto the sensor external structure.

The spraying device 38 includes at least one sprinkler 40, a spray motor 42 and a tube 44 connecting the spray motor 42 with the sprinkler 40. The spray motor 42 draws a cleaning solution, especially containing water from a fluid tank 46 and supplies the sprinkler 40 with water over the tube 44. The spray motor 42 also supplies another tube 48 and another sprinkler 50 with the cleaning solution from the fluid tank 46, especially for the windshield wiper function of the vehicle.

The radar sensor cleaning system 36 includes a processing unit 52 configured to compare the sensor signal information from the sensor signal of the radar sensor with a signal quality threshold and trigger activation of the spraying device 38 when the sensor signal information is below the signal quality threshold.

The spraying device 38 can be activated automatically by the processing unit 52 or a message to the car user can be output which informs about sensor contamination and suggest activing the spraying device 38, especially by operating a lever 54.

Figure 3 shows a diagram showing a performance benchmark used in the method from figure 1. The performance benchmark M is shown over time. If the performance benchmark M is below the signal quality threshold T, here at time t1, sensor blindness is detected and the cleaning step is triggered which performs a first spraying step 56. The first spraying step 56 improves the performance benchmark M of the object detection which is further improved by a second spraying step 58 of the cleaning step. The cleaning step reduces the sensor blindness, which is completely removed starting from time t2, corresponding to a performance benchmark M above an upper limit 60.

## Claims

1. Method for cleaning (10) a vehicle radar sensor comprising:
providing sensor signal information (14) from a sensor signal (16) of the radar sensor (18),
a comparison step (22) including comparing the sensor signal information (14) with a signal quality threshold (T),
if the sensor signal information (14) is below the signal quality threshold (T), a cleaning step (26) including cleaning debris from a sensor external structure (28) forming an interface between the radar sensor (18) and the vehicle environment (20), by at least one spraying step (26), which includes spraying fluid on the sensor external structure (28) by a spraying device (38),
**characterized in that**
the radar sensor (18) is arranged for object detection of objects (19) in the vehicle environment (20) and
the sensor signal information (14) for comparing with the signal quality threshold (T) includes at least a performance benchmark (M) of the radar sensor (18) object detection.

2. Method for cleaning (10) a vehicle radar sensor (18) according to claim 1, **characterized in that** the signal quality threshold (T) is an object detection performance threshold (24) of the object detection of the radar sensor (18).

3. Method for cleaning (10) a vehicle radar sensor (18) according to claim 1 or 2, **characterized in that** the performance benchmark (M) includes a quality benchmark about a quality of the object detection.

4. Method for cleaning (10) a vehicle radar sensor (18) according to one of claims 1 to 3, **characterized in that** the signal quality threshold (T) is a minimum number of objects (19) during a first time period and the performance benchmark (M) is a number of detected objects (19) in the vehicle environment (20) within the first time period.

5. Method for cleaning (10) a vehicle radar sensor (18) according to one of claims 1 to 3, **characterized in that** the signal quality threshold (T) is a maximum decrease rate of a number of objects (19) during a second time period and the performance benchmark (M) is a decrease of a number of detected objects (19) in the vehicle environment (20) within the second time period.

6. Method for cleaning (10) a vehicle radar sensor (18) according to one of the preceding claims, **characterized in that** the signal quality threshold (T) changes dynamically during vehicle (12) operation.

7. Method for cleaning (10) a vehicle radar sensor (18) according to one of the preceding claims, **characterized in that** the cleaning step (26) includes at least two spraying steps (30) separated by a third time period (32).

8. Radar sensor cleaning system (36) for cleaning a radar sensor (18) of a vehicle (12) for object detection in the vehicle environment (20), the cleaning system (36) is configured to perform the method for cleaning (10) the radar sensor (18) according to one one of the preceding claims and comprises:
a spraying device (38) associated with the radar sensor (18), configured to remove debris from a sensor external structure (28) forming the interface between the radar sensor (18) and the vehicle environment (20) and
a processing unit (52) configured to compare the sensor signal information (14) from the sensor signal (16) of the radar sensor (18) with a signal quality threshold (T) and trigger activation of the spraying device (38) when the sensor signal information (14) is below the signal quality threshold (T).

9. Radar sensor cleaning system (36) according to claim 8, **characterized in that** the spraying device (38) is arranged above the sensor external structure (28) in a direction opposite to the gravitational force direction.

10. Radar sensor cleaning system (36) according to claim 8 or 9, **characterized in that** the spraying device (38) is arranged outside of the radar sensor (18) Field-of-View which is used for the object detection.
